# EUROPEAN PATENT SPECIFICATION

(11) **EP 1 955 445 B1**
(45) Date of publication and mention of the grant of the patent: **26.01.2011**
(21) Application number: 06823785.8
(22) Date of filing: 29.11.2006
(51) Int. Cl.: H04B 3/54

(54) **POWER LINE COMMUNICATION SYSTEM AND COMMUNICATION DEVICE USED IN THE SYSTEM**
STROMLEITUNGS-KOMMUNIKATIONSSYSTEM UND IN DEM SYSTEM VERWENDETE KOMMUNIKATIONSEINRICHTUNG
SYSTEME DE COMMUNICATIONS SUR LIGNES INDUSTRIELLES ET DISPOSITIF DE COMMUNICATIONS UTILISE DANS LE SYSTEME

(30) Priority: 29.11.2005 KR 20050115005
(43) Date of publication of application: 13.08.2008
(73) Proprietor: LS Cable Ltd., Gangnam-gu, Seoul 135-798 (KR)
(72) Inventor: PARK, Dong Young, Gyeonggi-do 431-080 (KR); HAN, Kwan Hee, Gyeonggi-do 431-065 (KR); MOON, Sung Wook, Seoul 152-080 (KR); CHOI, Hyung Suk, Anyang-si, Gyeonggi-do 431-080 (KR)
(74) Representative: Köhler, Walter
(86) International application number: PCT/KR2006/005077
(87) International publication number: WO 2007/064136

(56) References cited:
- WO-A-03/041369
- KR-A- 20030 004 688
- KR-A- 20050 092 161
- US-A1- 2004 037 317
- US-B2- 6 904 134

## Description

### Technical Field

The present invention relates to a power line communication (PLC) system which includes a PLC Digital Subscriber Line Access Multiplexer (DSLAM) and a PLC coupling device, and a communication device used in the PLC system. More particularly, the present invention relates to a PLC system where a data signal is received from an Internet Protocol (IP) network via a PLC DSLAM, which is generally installed in a telephone office, the received data signal is converted into a PLC frame signal according to a predetermined PLC protocol, and the converted PLC frame signal is transmitted to at least one subscriber location via a telephone line, and a PLC coupling device of the subscriber location receives the PLC, frame signal via the telephone line, couples the PLC frame signal with a power line, and transmits the coupled PLC frame signal to at least one communication terminal, and a communication device used in the PLC system.

### Background Art

A power line communication (PLC) indicates a communication method which transmits/receives a data signal via a power line, wired in a house or an office to supply power. Specifically, the PLC may be embodied by modulating a data signal into a high frequency signal, transmitting the modulated high frequency signal to an alternating current (AC) line, and separating and receiving the transmitted high frequency signal via a high frequency filter. In this instance, the high frequency tilter has a cutoff frequency of about 50 Hz or about 60 Hz.

Since a network utilizing PLC technology can be constructed utilizing an existing wiring, a cost burden, which may be caused by a construction with additional wiring, may be reduced. Also, an expansion that can install an additional device to a network with only a plug-in, even after constructing the network, is guaranteed. Thus, the PLC technology is widely utilized for any type of wired/wireless network solutions.

Document WO 03/041369 A (D1) describes a telecommunication gateway system which also provides PLC in order to transmit data via an existing power line which is wired in a house to supply electrical power. A Digital Subscriber Line Access Multiplexer (DSLAM) receives data from an Internet network. After passing a line power converter unit (LPCU) the data is transmitted via a telephone line to at least one subscriber location. In each subscriber location the data is received by a gateway module which includes a DSL modem and a PLC module. The DSL modem transmits the data to the PLC modem. The PLC modem converts the data signal into a signal corresponding to a predetermined PLC protocol and couples the converted signal with an existing power line.

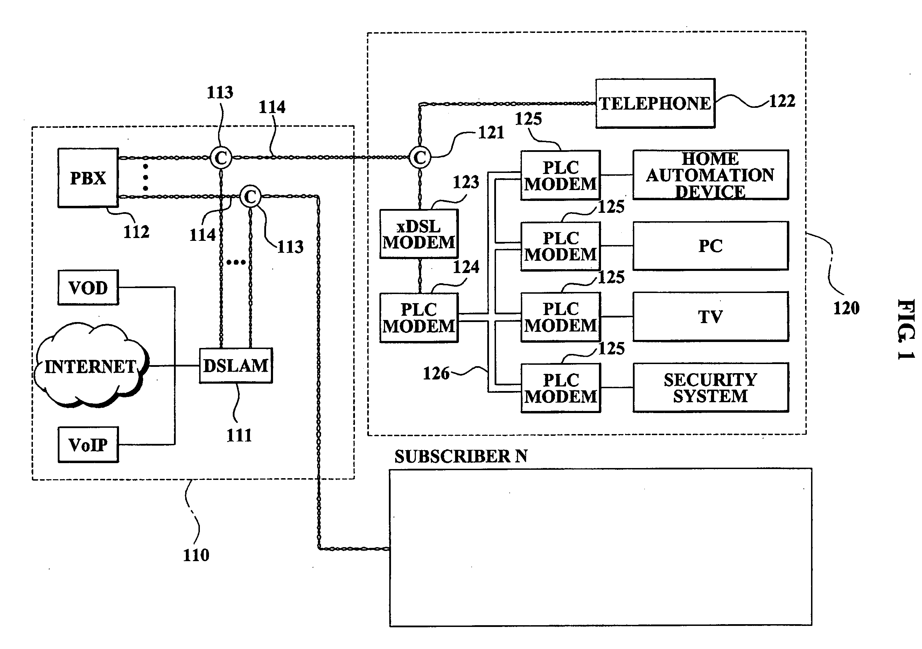

FIG. 1 is a block diagram illustrating a configuration of a network including a subscriber network using a telephone network and a home PLC system according to a conventional art.

Referring to FIG. 1, a telephone office 110 includes a Digital Subscriber Line Access Multiplexer (DSLAM) 111 and a private branch exchange (PBX) 112. The DSLAM 111 corresponds to a multiplexing device which can collect data, transmitted/received by any type of Digital Subscriber Line (xDSL), and transmit the collected data to an Internet Protocol (IP) network. Specifically, the DSLAM 111 functions as an interface between an xDSL subscriber and a service provider and thus may provide the xDSL subscriber with various types of network functions.

In FIG. 1, the DSLAM 111 receives a data signal from a video on demand (VOD) system, a Voice over Internet Protocol (VoIP) system, or an Internet network, multiplexes the data signal, and transmits the multiplexed data signal to an xDSL modem 123 of a subscriber location via a telephone line 114. In this instance, the telephone line 114 may be coupled with another telephone line, connecting with the PBX 112, by a coupler 113. Specifically, the data signal transmitted from the DSLAM 111 and a voice signal transmitted from the PBX 112 are coupled with each other by the coupler 113, and transmitted to another coupler 121 installed in the subscriber location 120.

The other coupler 121 installed in the subscriber location 120 receives the coupled data signal and voice signal via the telephone line 114. Also, the coupler 121 splits the voice signal and the data signal respectively, and then transmits the voice signal to a telephone 122 and transmits the data signal to the xDSL modem 123.

The xDSL modem 123 transmits the data signal to a PLC modem 124. The PLC modem 124 converts the data signal into a signal corresponding to a predetermined PLC protocol, couples the converted signal with a power line 126, and transmits the coupled signal to at least one communication terminal.

In this instance, each of the at least one communication terminal includes another PLC modem 125. The other PLC modem 125 extracts a data signal from a PLC signal transmitted via the power line 126, and transmits the extracted data signal to each of the at least one communication terminal. In this instance, the communication terminal may include a home automation device, a personal computer (PC), a television (TV), a security system, and the like.

In a PLC system according to the conventional art, a home network and various types of communication services may only be provided by utilizing a previously installed power line, without installing an additional wiring to a subscriber location. However, as described with FIG. 1, only when an xDSL modem and a PLC modem are separately installed in the subscriber location, a subscriber of a PLC service may utilize the PLC service. Also, only when the xDSL modem and the PLC modem perform protocol conversion according to a communication protocol between the xDSL modem and the PLC modem in the subscriber location, the xDSL modem and the PLC modem may transmit/receive a signal with an external location.

Also, in the case of an xDSL communication, a frequency band between an uplink and a downlink is different. Therefore, the at least one communication terminal, which is installed in the subscriber location, may not communicate with each other. So that a communication terminal installed in a first subscriber location may communicate with another communication terminal installed in a second subscriber location, a protocol conversion has to be performed via a PLC modem installed in each subscriber location. Also, the communication terminal of the first subscriber location may communicate with the other communication terminal of the second subscriber location only via a DSLAM.

As an example, in the conventional art, when an xDSL modem is installed in a subscriber location, although a communication between subscribers is performed in the same apartment area, a data signal has to pass through a DSLAM of a telephone office to perform the communication. Also, in a line configuration according to the convention art, a plurality of subscriber locations may not perform a one-to-N communication and may perform only a one-to-one communication.

Accordingly, a development of a PLC system which can outperform the conventional art, utilize an existing telephone line and a power line as is, and can apply a PLC frame in each subscriber location without performing a PLC protocol conversion, and enables a one-to-N communication between a plurality of subscriber locations when communication terminals of subscriber locations are connected to each other, is required.

### Disclosure of Invention

### Technical Goals

The present invention provides a power line communication (PLC) Digital Subscriber Line Access Multiplexer (DSLAM) which enables a PLC frame signal to be utilized as is in each subscriber location without performing a PLC protocol conversion with respect to a data signal in the each subscriber location via an xDSL modem and a PLC modem by receiving the data signal from a predetermined Internet Protocol (IP) network, converting the data signal into the PLC frame signal, and transmitting the converted PLC frame signal to at least one subscriber location via a telephone line.

The present invention also provides a PLC coupling device which can embody a PLC using an existing telephone line and a power line without a protocol conversion of a data signal and additional power supply, by coupling a PLC frame signal, which is transmitted via a telephone line of a subscriber location, with the power line, and then transmitting the PLC frame signal to at least one communication terminal installed in the subscriber location.

The present invention also provides a PLC system where a PLC DSLAM, which is generally installed in a telephone office, converts a data signal into a PLC frame signal and transmits the converted PLC frame signal to each subscriber location, and thus, when performing a communication between a plurality of closely-located subscriber locations, such as subscribers in the same apartment area, and the like, a protocol conversion of a PLC frame signal via a PLC modem and a PLC DSLAM are not required, and the plurality of subscriber locations can directly transmit/receive the PLC frame signal.

The present invention also provides a PLC system where telephone lines installed in a section between a PLC device and a PLC DSLAM with respect to a plurality of closely-located subscriber locations, such as subscribers in the same apartment area, and the like, are coupled to be parallel with each other and thus a one-to-N communication is enabled between closely-located subscribers without a PLC protocol conversion.

### Technical solutions

According to an aspect of the present invention, there is provided a power line communication (PLC) Digital Subscriber Line Access Multiplexer (DSLAM), including: a first communication port unit connecting with a predetermined Internet Protocol (IP) network and receiving a data signal via the IP network; a second communication port unit connecting with a predetermined telephone line, the telephone line being coupled with each of at least one telephone line that connects an exchange and at least one subscriber location; a PLC converter converting a Media Access Control (MAC) address of data signal into a MAC address corresponding to the PLC protocol, and converting the data signal into a frame signal including a physical layer corresponding to the PLC protocol; and a transmission control unit controlling the frame signal to be transmitted to a predetermined coupling device, which is installed in each of the at least one subscriber location, via the telephone line that comets with the second communication port unit, wherein the coupling device connects with each of the telephone line and a predetermined power line, couples the frame signal, which is received via the telephone line, with the power link, and transmits the frame signal to at least one communication terminal that is installed in the subscriber location.

According to another aspect of the present invention, there is provided a PLC coupling device installed in a subscriber location, including: a telephone line port unit connecting with a predetermined telephone line and receiving a frame signal from a predetermined PLC DSLAM connected via the telephone line; a power line port unit connecting with at least one communication terminal, which is installed in the subscriber location, via a power line; and a coupling control unit coupling the frame signal with the power line and transmitting the frame signal to the at least one communication terminal, wherein the PLC DSI.AM converts a Media Access Control (MAC) address of data signal into a MAC address corresponding to the PLC protocol, and converts a data signal into a frame signal corresponding to a predetermined PLC protocol, and transmits the PLC frame signal to the telephone line port unit via the telephone line.

### Brief Descrintion of Drawings

FIG. 1 is a diagram illustrating a configuration of a network including a subscriber network using a telephone network and a home PLC system according to a conventional art;
FIG. 2 is a block diagram illustrating a network of a PLC system according to an embodiment of the present invention;
FIG. 3 is a block diagram illustrating a configuration of a PLC, DSLAM according to an embodiment of the present invention;
FIG. 4 is a block diagram illustrating a configuration of a PLC DSLAM according to another embodiment of the present invention;
FIG. 5 is a block diagram illustrating a configuration of a PLC coupling device according to an embodiment of the present invention; and FIG. 6 is a circuit diagram illustrating a circuit of a PLC coupling device according to an embodiment of the present invention.

### Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

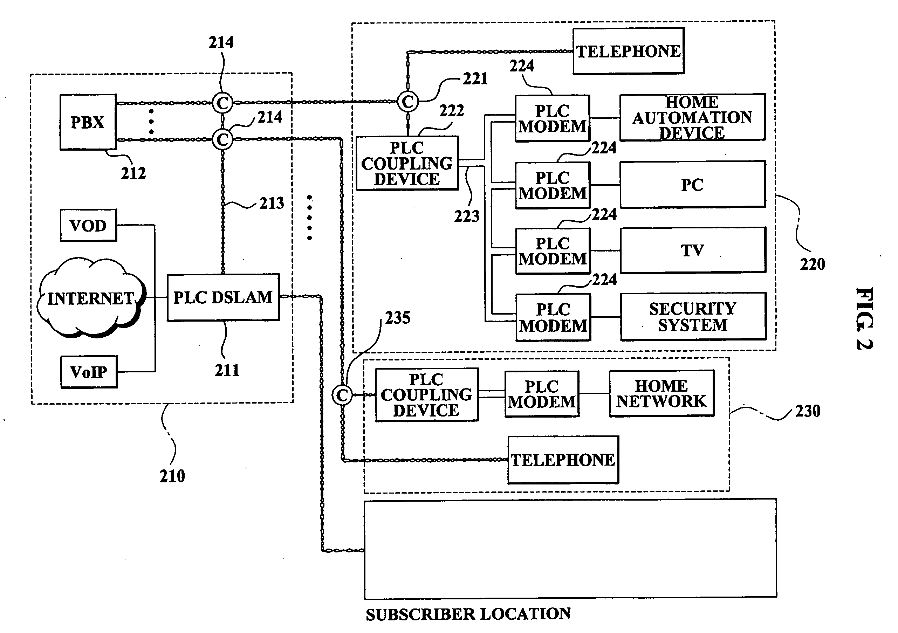

FIG. 2 is a block diagram illustrating a network of a power line communication (PLC) system according to an embodiment of the present invention.

The PLC system according to the present embodiment includes a PLC Digital Subscriber Line Access Multiplexer (DSLAM) 211, a private branch exchange (PBX) 212, a telephone line 213, and a coupler 214, which are installed in a telephone office 210, and a PLC coupling device 222, a power line 223, and a PLC modem 224, which are installed in a subscriber location 220.

The PLC DSLAM 211 may be installed in a telephone office. In this instance, the telephone office includes a private telephone office, such as an external communication room, a Main Distribution Frame (MDF), and the like, in which the PBX 212 is installed for a large number of subscribers in a company, an apartment area, and the like. In FIG. 2, the private telephone office installed with the PBX 212 is utilized.

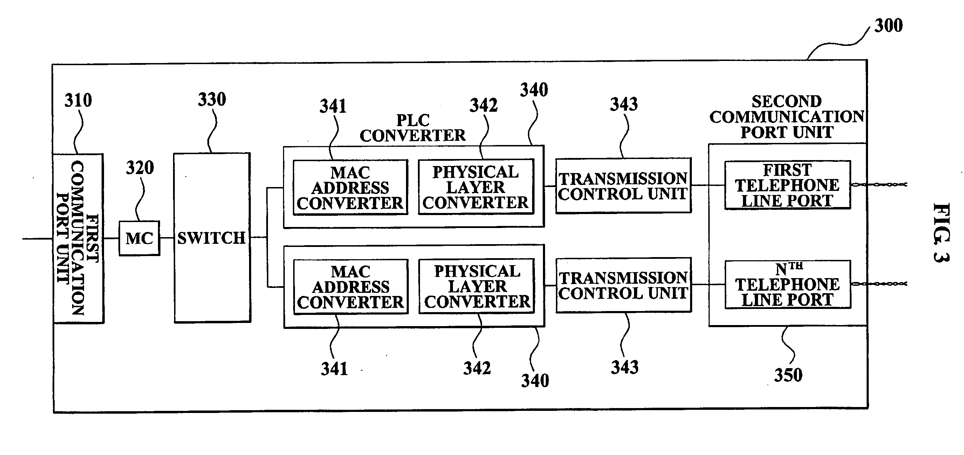

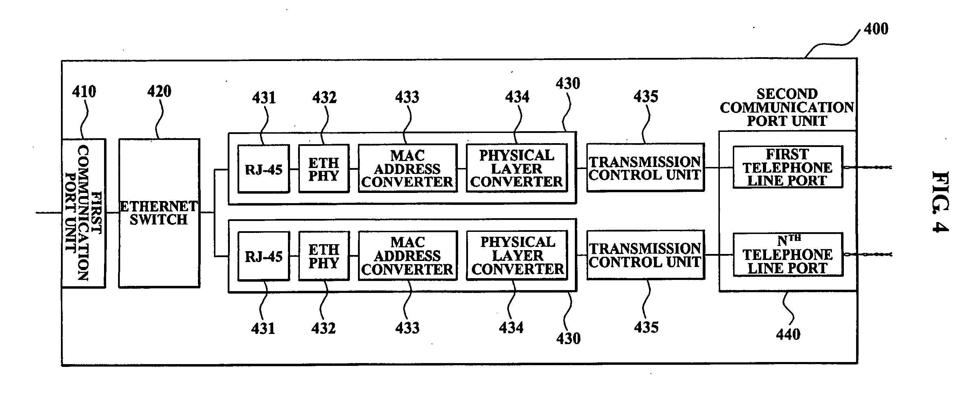

The PLC DSLAM 211 connects with a predetermined Internet Protocol (IP) network. The PLC DSLAM 211 receives a data signal via the IP network, and converts the data signal into a PLC frame signal corresponding to a predetermined PLC protocol, which will be described in detail with reference to FIGS. 3 and 4.

FIG. 3 is a block diagram illustrating a configuration of a PLC DSLAM 300 according to an embodiment of the present invention.

The PLC DSLAM 300 according to the present embodiment includes a first communication port unit 310, a medium converter 320, a switch 330, a PLC converter 340, a transmission control unit 343, and a second communication port unit 350. The PLC converter 340 includes a Media Access Control (MAC) converter 341 and a physical layer converter 342.

The first communication port unit 310 connects with a predetermined IP network. Also, the first communication port unit 310 receives a data signal from a predetermined server or a terminal via the IP network. As an example, the first communication port unit 310 may receive moving picture data from a predetermined video on demand (VOD) server via the IP network. Also, the first communication port unit 310 may receive a Voice over Internet Protocol (VoIP) call from a VoIP system via the IP network. Also, the first communication port unit 310 may receive various data signals from various types of servers or terminals that connect with the Internet. In this instance, the first communication port unit 310 may include various types of ports corresponding to a standard of each of various types of communication lines to connect with the various types of communication lines corresponding to an IP network standard.

When the IP network is constructed as a Metropolitan Area network (MAN), the medium converter 320 performs a medium conversion between an Ethernet signal and any type of Digital Subscriber Line (xDSL) signal using an existing copper line. The MAN connects a local area network (LAN) of a company, an organization, an individual user, and the like, with a public network of a local communication provider via an optical cable, constructs a single communication network based on a metropolitan area, and transmits data using Ethernet. In this case, the medium converter 320 may convert a signal according to a different communication protocol.

The switch 330 multiplexes/demultiplexes the data signal, which is received from the IP network via the first communication port unit 310, and switches the data signal. Specifically, the switch 330 may perform any function of a DSLAM in a general PLC system.

The PLC converter 340 converts the data signal, which is received from the IP network via the first communication port unit 310, into a PLC frame signal corresponding to a predetermined PLC protocol. In this instance, the PLC converter 340 may include the MAC address converter 341 and the physical layer converter 342.

The MAC address converter 341 converts a MAC address of the data signal into a MAC address corresponding to the PLC protocol. In this instance, the PLC protocol may include any type of protocol utilized as a PLC protocol in the related arts. Therefore, the MAC address converter 341 may convert the data signal into a data signal which includes various types of MAC addresses corresponding to each PLC protocol.

The physical layer converter 342 modulates the data signal into a PLC frame signal. In this instance, the data signal includes the converted MAC address, and the PLC frame signal includes a physical layer corresponding to the PLC protocol. Specifically, the physical layer converter 342 may couple, and modulate or demodulate a channel of the data signal, which includes the converted MAC address, according to the PLC protocol. As described above, the physical layer converter 342 may convert the data signal into the PLC frame signal corresponding to the PLC protocol by performing channel coupling, and modulation or demodulation.

The transmission control unit 343 transmits the PLC frame signal to a predetermined coupling device, which is installed in each of the at least one subscriber location, via the telephone line that connects with the second communication port unit 350. In this instance, the transmission control unit 343 may couple the PLC frame signal, as an analog signal, with the telephone line, and transmit the coupled PLC frame signal. In this case, the transmission control unit 343 may include a predetermined coupler.

As described above, the second communication port unit 350 connects with a predetermined telephone line. The second communication port unit 350 may include at least one telephone line port to connect with at least one telephone line. Specifically, a plurality of PLC converters 340 may be provided in the PLC DLSAM 300. In this case, PLC frame signals transmitted from each of the plurality of PLC converters 340 may be transmitted to each subscriber location via each of the at least one telephone line port which is included in the second communication port unit 350. Also, a plurality of transmission control units 343 may be provided corresponding to the plurality of PLC converters 340 and a number of telephone line ports.

FIG. 4 is a block diagram illustrating a configuration of a PLC DSLAM 400 according to another embodiment of the present invention.

The PLC DSLAM 400 according to the present embodiment may include a first communication port unit 410, an Ethernet switch 420, a PLC converter 430, a transmission control unit 435, and a second communication port unit 440.

The first communication port unit 410, the transmission control unit 435, and the second communication port unit 440 may be configured to be the same as each component of the PLC DSLAM 300 described above.

The Ethernet switch 420 multiplexes/demultiplexes a data signal, which is received from an IP network via the first communication port unit 410, and switches the data signal. Specifically, the Ethernet switch 420 may perform any function of a DSLAM in a general PLC system.

The PLC converter 430 may include an RJ-45 connector 431, an Ethernet physical layer converter ETH PHY 432, a MAC address converter 433, and a physical layer converter 434. The RJ-45 connector 431 connects with the Ethernet switch 420 via an Unshielded Twisted Pair (UTP) cable. Also, the RJ-45 connector 431 may be constructed as a jack including a receptacle and a plug. The Ethernet physical layer converter 432 may perform a physical layer conversion for a general Ethernet communication. A configuration and operation of the MAC address converter 433 and the physical layer converter 434 may be the same as the configuration and operation described above with FIG. 3.

As described above, each of the PLC DSLAMs 300 and 400 may include various types of configuration components according to a construction method of the IP network.

Also, a telephone line connecting with each of the PLC DSLAMs 300 and 400 may be coupled with at least one other telephone line that connects a PBX with at least one subscriber location. Descriptions related thereto will be made in detail with reference again to FIG. 2.

Referring again to FIG. 2, the telephone line 213 connecting with the PLC DSLAM 211 may be coupled with another telephone line connecting with the PBX 212 via the coupler 214. In this instance, the coupler 214 couples a voice signal with a PLC frame signal, and transmits the coupled voice signal and the PLC frame signal to a PLC coupling device 222. In this instance, the voice signal is transmitted from the PBX 212, and the PLC frame signal is transmitted from the PLC DSLAM 211.

As shown in FIG. 2, a single telephone line connecting with the PLC DSLAM 211 may connect with each of a plurality of telephone lines, which connects with the PBX 212, in parallel. Specifically, the plurality of telephone lines connects with a plurality of subscriber locations within a predetermined section from the PBX 212, and a plurality of the couplers 214 connects with the plurality of telephone lines respectively. In this instance, the single telephone line connecting with the PLC DSLAM 211 may connect with each of the plurality of the couplers 214. The coupling of telephone lines may be applied to a plurality of closely-located subscriber locations, such as subscribers in the same apartment area. In this case, a one-to-N communication of directly transmitting a PLC frame signal between the plurality of subscriber locations via the coupled telephone lines may be embodied.

Each configuration component and operation of the telephone office 210 in the PLC system according to the present invention has been described above. Hereinafter, each configuration and operation of the subscriber location 220 will be described.

The coupled voice signal and PLC frame signal, coupled by the coupler 214, of the telephone office 210 are transmitted to another coupler 221 of the subscriber location 220. The coupler 221 extracts the voice signal from the coupled voice signal and PLC frame signal, and transmits the extracted voice signal to a telephone. Also, the coupler 221 extracts the PLC frame signal from the coupled voice signal and PLC frame signal, and transmits the extracted PLC frame signal to the PLC coupling device 222. In this instance, a section between the coupler 221 and the PLC coupling device 222 may be connected to each other via the telephone line.

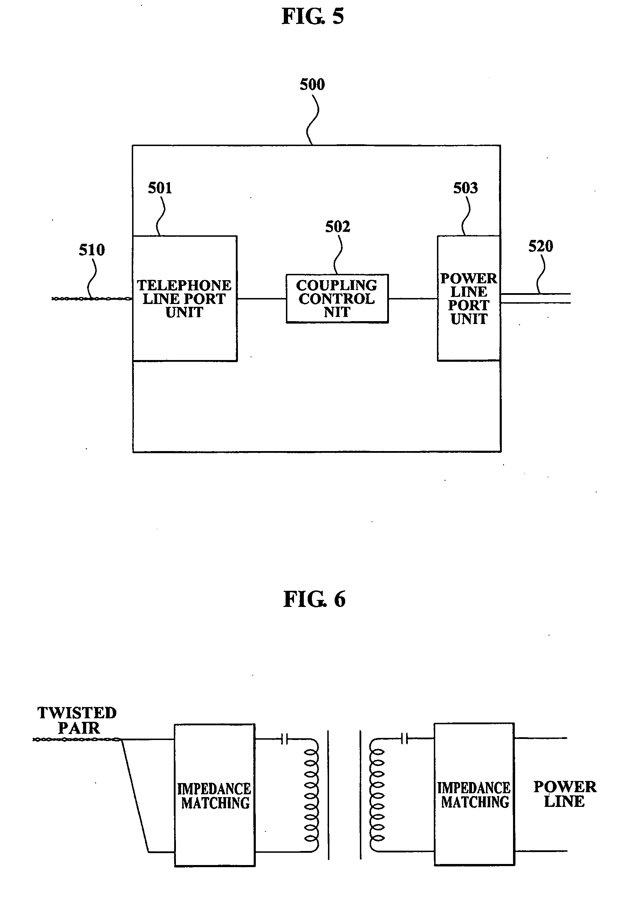

The PLC coupling device 222 receives the PLC frame signal from the coupler 221 via the telephone line. The PLC coupling device 222 couples the received PLC frame signal with the power line 223, and transmits the coupled PLC frame signal to each PLC modem 224. Descriptions related thereto will be made with reference to FIG. 5.

FIG. 5 is a block diagram illustrating a configuration of a PLC coupling device 500 according to an embodiment of the present invention.

The PLC coupling device 500 may include a telephone line port unit 501, a coupling control unit 502, and a power line port unit 503.

The telephone line port unit 501 connects with the coupler 221 via a telephone line 510. The telephone line port unit 501 receives a PLC frame signal from the coupler 221 via the telephone line 510.

The power line port unit 503 connects with each PLC modem 224 of at least one communication terminal, which is installed in the subscriber location 220, via a power line 520.

The coupling control unit 502 couples the PLC frame signal, which is received via the telephone line port unit 501, with the power line 520, and transmits the coupled PLC frame signal to each of the PLC modems 224 of the at least one communication terminal. The coupling control unit 502 may include any type of a power line coupling control operation of a data signal, which is performed in a general PLC modem. Also, the coupling control unit 502 may perform impendence matching with respect to the PLC frame signal, in correspondence to a frequency band of the power line 520.

Specifically, the PLC coupling device 500 receives a PLC frame signal via the telephone line 510, couples the PLC frame signal with a power signal of the power line 510, and transmits the coupled PLC frame signal to each PLC modem. Therefore, as shown in FIG. 6, the PLC coupling device 500 may be embodied as a simple circuit including a predetermined impendence matching circuit, a coil, and a condenser.

Referring again to FIG. 2, the PLC frame signal coupled with the power line 223 by the PLC coupling device 222 is transmitted to each PLC modem 224 which connects with at least one communication terminal installed in the subscriber location 220. In this instance, the PLC modem 224 extracts the PLC frame signal from the coupled PLC frame signal and power signal, converts the extracted PLC frame signal according to a predetermined protocol, and transmits the converted PLC frame signal to each communication terminal. The PLC modem 224 may be utilized in a general PLC system. Also, the communication terminal may include a home automation device, a PC, a TV, a security system, and the like.

As described above, according to the present invention, an xDSL modem is not required for a subscriber location. Also, a PLC modem for converting the data signal into a PLC frame signal is not required for the subscriber location. Therefore, a PLC system of the subscriber location may be even more simply constructed.

Specifically, in a PLC system according to the present invention, a PLC DSLAM converts a data signal, from a telephone office section, into a PLC frame signal which is suitable for a PLC and transmits the PLC frame signal to a subscriber location. Therefore, the subscriber location is not required to convert the data signal according to a PLC protocol. The subscriber location may utilize a PLC service by only installing a PLC modem in a communication terminal.

Also, in the PLC system according to the present invention, a telephone line connecting with a PLC DSLAM may be coupled with another telephone line connecting a PBX by installing at least one coupler corresponding to a number of a plurality of subscribers in a company, an apartment area, and the like, in a telephone line of a telephone line section.

In this case, the plurality of subscribers in the company, the apartment area, and the like, may perform a multilateral PLC communication by constructing a one-to-N communication network. Specifically, the plurality of subscribers may construct a multilateral communication network where the plurality of subscribers may directly transmit/receive PLC frame signals. In this instance, only PLC frame signals are transmitted/received in the constructed communication network. Therefore, a more stable communication service not requiring a protocol conversion may be embodied.

Also, when constructing a PLC system according to the present invention, communication terminals of subscribers may be connected to each other. Also, the PLC system may be constructed to readily interoperate with a previously installed PLC network without additional equipment.

According to the present invention, there is provided a PLC DSLAM which enables a PLC frame signal to be utilized as is in each subscriber location without performing a PLC protocol conversion with respect to a data signal in the each subscriber location via an xDSL modem and a PLC modem by receiving the data signal from a predetermined Internet Protocol (IP) network, converting the data signal into the PLC frame signal, and transmitting the converted PLC frame signal to at least one subscriber location via a telephone line.

ALso, according to the present invention, there is provided a PLC coupling device which can embody a PLC using an existing telephone line and a power line without a protocol conversion of a data signal and additional power supply, by coupling a PLC frame signal, which is transmitted via a telephone line of a subscriber location, with the power line, and then transmitting the PLC frame signal to at least one communication terminal installed in the subscriber location.

Also, according to the present invention, there is provided a PLC system where a PLC DSLAM, which is generally installed in a telephone office, converts a data signal into a PLC frame signal and transmits the converted PLC frame signal to each subscriber location, and thus, when performing a communication between a plurality of closely-located subscriber locations, such as subscribers in the same apartment area, and the like, a protocol conversion of a PLC frame signal via a PLC modem and a PLC DSLAM are not required, and the plurality of subscriber locations can directly transmit/receive the PLC frame signal.

Also, according to the present invention, there is provided a PLC system where telephone lines installed in a section between a PLC device and a PLC DSLAM with respect to a plurality of closely-located subscriber locations, such as subscribers in the same apartment area, and the like, are coupled to be parallel with each other and thus a one-to-N communication is enabled between closely-located subscribers without a PLC protocol conversion.

Although a few embodiments of the present invention have been shown and described, the present invention is not limited to the described embodiments.

## Claims

1. A power line communication (PLC) Digital Subscriber Line Access Multiplexer (DSLAM) (211, 300), comprising:
a first communication port unit (310) connecting with a predetemined lnternet Protocol (IP) network and receiving a data signal via the IP network;
a second communication port unit (350) connecting with a predetermined telephone line, the telephone line being coupled with each of at least one telephone line that connects an exchange and at least one subscriber location (220);
**characterized by**
a PLC converter (340) converting a Media Access Control (MAC) address of data signal into a MAC address corresponding to the PLC protocol, and converting the data signal into a frame signal including a physical layer corresponding to the PLC protocol; and
a transmission control unit (343) controlling the frame signal to be transmitted to a predetermined coupling device, which is installed in each of the at least one subscriber location (220), via the telephone line that connects with the second communication port unit (350),
wherein the coupling device (222, 500) connects with each of the telephone line and a predetermined power line, couples the frame signal, which is received via the telephone line, with the power link, and transmits the frame signal to at least one communication terminal that is installed in the subscriber location (220).

2. The PLC DSLAM (211, 300) of claim 1, wherein the transmission control unit (343) converts the frame signal into an analog signal and transmits the analog signal to the coupling device of the subscriber location (220) via the telephone line.

3. A PLC coupling device (222, 500) installed in a subscriber location (220), comprising:
a telephone line port unit (501) connecting with a predetermined telephone line;
a power line port unit (503) connecting with at least one communication terminal, which is installed in the subscriber location (220), via a power line; and
**characterized by**
the telephone line port unit (501) receiving a frame signal from a predetermined PLC DSLAM connected via the telephone line, and
a coupling control unit (502) coupling the frame signal with the power line and transmitting the frame signal to the at least one communication terminal,
wherein the PLC DSLAM (300) converts a Media Access Control (MAC) address of data signal into a MAC address corresponding to the PLC protocol, and converts a data signal into a frame signal including a physical layer corresponding to the PLC protocol, and transmits the frame signal to the telephone line port (501) unit via the telephone line.

4. The PLC coupling device (222, 500) of claim 3, wherein the coupling control unit (502) performs impendence matching, with respect to the received frame signal couples with a power signal of the power line.

## Patentansprüche

1. Digitalteilnehmerleitungszugangs-Multiplexer (DSLAM) (211, 300) für Stromleitungskommunikation (PLC), der umfasst:
eine erste Kommunikationsanschlusseinheit (310), die mit einem Netz mit vorgegebenem Internet-Protokoll (IP) verbunden ist und über das IP-Netz ein Datensignal empfängt; und
eine zweite Kommunikationsanschlusseinheit (350), die mit einer vorgegebenen Telefonleitung verbunden ist, wobei die Telefonleitung sowohl mit wenigstens einer Telefonleitung, die mit einer Vermittlungsstelle verbunden ist, und mit wenigstens einem Teilnehmerort (220) gekoppelt ist;
**gekennzeichnet durch**
einen PLC-Umsetzer (340), um eine Medienzugriffssteuerungs-Adresse (MAC-Adresse) des Datensignals in eine dem PLC-Protokoll entsprechende MAC-Adresse umzusetzen und um das Datensignal in ein Rahmensignal umzusetzen, das eine physikalische Schicht enthält, die dem PLC-Protokoll entspricht; und
eine Übertragungssteuereinheit (343), um das Rahmensignal, das an eine vorgegebene Kopplungsvorrichtung übertragen werden soll, die in jedem des wenigstens einen Teilnehmerortes (220) installiert ist, über die Telefonleitung, die mit der zweiten Kommunikationsanschlusseinheit (350) verbunden ist, zu steuern,
wobei die Kopplungsvorrichtung (222, 500) sowohl mit der Telefonleitung als auch mit einer vorgegebenen Stromleitung verbunden ist, das Rahmensignal, das über die Telefonleitung empfangen wird, mit der Stromleitungsstrecke koppelt und das Rahmensignal an wenigstens ein Kommunikationsendgerät überträgt, das an dem Teilnehmerort (220) installiert ist.

2. PLC-DSLAM (211, 300) nach Anspruch 1, wobei die Übertragungssteuereinheit (343) das Rahmensignal in ein analoges Signal umsetzt und das analoge Signal an die Kopplungsvorrichtung des Teilnehmerortes (220) über die Telefonleitung überträgt.

3. PLC-Kopplungsvorrichtung (222, 500), die an einem Teilnehmerort (220) installiert ist und umfasst:
eine Telefonleitungsanschlusseinheit (501), die mit einer vorgegebenen Telefonleitung verbunden ist; und
eine Stromleitungsanschlusseinheit (503), die mit wenigstens einem Kommunikationsendgerät, das am Teilnehmerort (220) installiert ist, über eine Stromleitung verbunden ist;
**gekennzeichnet durch**
die Telefonleitungsanschlusseinheit (501), die ein Rahmensignal von einem über die Telefonleitung verbundenen PLC-DSLAM empfängt, und
eine Kopplungssteuereinheit (502), die das Rahmensignal mit der Stromleitung koppelt und das Rahmensignal an das wenigstens eine Kommunikationsendgerät überträgt,
wobei der PLC-DSLAM (300) eine Medienzugriffssteuerungs-Adresse (MAC-Adresse) des Datensignals in eine MAC-Adresse, die dem PLC-Protokoll entspricht, umsetzt, ein Datensignal in ein Rahmensignal umsetzt, das eine physikalische Schicht enthält, die dem PLC-Protokoll entspricht, und das Rahmensignal über die Telefonleitung an den Telefonleitungsanschluss (501) überträgt.

4. PLC-Kopplungsvorrichtung (222, 500) nach Anspruch 3, wobei die Kopplungssteuereinheit (502) eine Impedanzanpassung in Bezug auf das empfangene Rahmensignal ausführt und mit einem Stromsignal der Stromleitung koppelt.

## Revendications

1. Multiplexeur d'accès de ligne d'abonné numérique (DSLAM) de communication sur ligne de puissance (PLC) (211, 300), comprenant :
une première unité formant port de communication (310) assurant une connexion avec un réseau à Protocole Internet (IP) prédéterminé et recevant un signal numérique par l'intermédiaire du réseau IP ;
une seconde unité formant port de communication (350) assurant une connexion avec une ligne téléphonique prédéterminée, la ligne téléphonique étant couplée avec chacune d'au moins une ligne téléphonique qui assure un échange et au moins un site d'abonné (220) ;
**caractérisé par**
un convertisseur PLC (340) convertissant une adresse de commande d'accès au support (MAC) de signal numérique en une adresse MAC correspondant au protocole PLC, et convertissant les signaux numériques en un signal de bloc comportant une couche physique correspondant au protocole PLC ; et
une unité de commande de transmission (343) commandant le signal de bloc à transmettre à un dispositif de couplage prédéterminé, qui est installée sur chacun d'au moins un site d'abonné (220), par l'intermédiaire de la ligne téléphonique qui est raccordée à la seconde unité formant port de communication (350),
dans lequel le dispositif de couplage (222, 500) est couplé à chacun de la ligne téléphonique et d'une ligne de puissance prédéterminée, assure le couplage du signal de bloc, qui est reçu par l'intermédiaire de la ligne téléphonique, à la ligne de puissance, et transmet le signal de bloc à au moins à un terminal de communication qui est installé chez l'abonné (220).

2. Multiplexeur DSLAM PLC (211, 300) selon la revendication 1, dans lequel l'unité de commande de transmission (343) convertit le signal de bloc en un signal analogique et transmet le signal analogique au dispositif de couplage installé chez l'abonné (220) par l'intermédiaire de la ligne téléphonique.

3. Dispositif de couplage PLC (222, 500) installé chez un abonné (220), comprenant :
une unité formant port de ligne téléphonique (501) raccordée à une ligne téléphonique prédéterminée ;
une unité formant port de ligne de puissance (503) raccordée à au moins un terminal de communication, qui est installée sur le site l'abonné (220), par l'intermédiaire d'une ligne de puissance ; et
**caractérisé par**
l'unité formant port de ligne téléphonique (501) qui assure la réception du signal de bloc à partir d'un multiplexeur DSLAM PLC prédéterminé raccordé par l'intermédiaire de la ligne téléphonique, et
une unité de commande (502) qui assure le couplage du signal de bloc à la ligne de puissance et transmet le signal de bloc au ou aux terminaux de communication,
dans lequel le multiplexeur DSLAM PLC (300) convertit une adresse de commande d'accès au support (MAC) d'un signal numérique en une adresse MAC correspondant au protocole PLC, et convertit un signal numérique en un signal de bloc comportant une couche physique correspondant au protocole PLC, et transmet le signal de bloc à l'unité de port de ligne téléphonique (501) par l'intermédiaire de la ligne téléphonique.

4. Dispositif de couplage PLC (222, 500) selon la revendication 3, dans lequel l'unité de commande de couplage (502) exécute une adaptation d'impédance, par rapport au signal de bloc reçu couplé avec un signal de puissance de la ligne de puissance.
